# EUROPÄISCHE PATENTANMELDUNG

(11) **EP 3 973 760 A1**
(43) Veröffentlichungstag der Anmeldung: **30.03.2022**
(21) Anmeldenummer: 21401035.7
(22) Anmeldetag: 07.09.2021
(51) Int. Cl.: A01C 5/06, A01C 7/20

(54) **SÄAGGREGAT FÜR EINE SÄMASCHINE**

(30) Priorität: 24.09.2020 DE 102020124849
(71) Anmelder: Amazonen-Werke H. Dreyer SE & Co. KG, 49205 Hasbergen (DE)
(72) Erfinder: Koch, Jens, 29525 Uelzen (DE); Stier, Roy, 26121 Oldenburg (DE)

(57) **Zusammenfassung**

Die Erfindung betrifft ein Säaggregat (10) für eine Sämaschine, mit einer Trägerstruktur (12) und zumindest einer mit der Trägerstruktur (12) verbundenen Tragrolle (18, 18a, 18b), wobei die Tragrolle (18, 18a, 18b) eine profilierte Lauffläche (28) aufweist.

## Beschreibung

Die Erfindung betrifft ein Säaggregat für eine Sämaschine nach dem Oberbegriff des Patentanspruchs 1 und eine Sämaschine nach dem Oberbegriff des Patentanspruchs 13.

Säaggregate weisen üblicherweise eine Trägerstruktur auf, wobei an der Trägerstruktur eine Einrichtung zur Saatgutablage und eine oder mehrere Tragrollen befestigt sind. Die Tragrollen rollen während des Sävorgangs auf dem Boden der landwirtschaftlichen Nutzfläche ab und dienen zur Tiefenführung des Säschars.

Im Stand der Technik werden Säaggregate bisher mit Tragrollen ausgestattet, welche eine im Wesentlichen glatte Lauffläche aufweisen. Derartige Tragrollen sind beispielsweise aus den Druckschriften EP 2 238 820 B1 und EP 2 904 890 A1 bekannt. Derartigen Tragrollen kann es bei einer ungünstigen Bodenbeschaffenheit an Bodenhaftung mangeln, sodass die Tragrollen Schlupf entwickeln oder sogar stehen bleiben und somit Erde durch die Tragrollen aufgeschoben wird. Glatte Laufflächen können außerdem zum Verschmieren der Erdoberfläche führen und die Bildung von Dämmen zwischen den Säscharen begünstigen.

Die der Erfindung zugrundeliegende Aufgabe besteht somit darin, den Schlupf von Säaggregatstragrollen während eines Sävorgangs auf einer landwirtschaftlichen Nutzfläche mit einer schlupfbegünstigenden Bodenbeschaffenheit zu verringern.

Die Aufgabe wird gelöst durch ein Säaggregat der eingangs genannten Art, wobei die Tragrolle des erfindungsgemäßen Säaggregats eine profilierte Lauffläche aufweist.

Durch die profilierte Lauffläche werden die Bodenhaftung der Tragrolle und somit der Eigenantrieb verbessert. Auf diese Weise wird das Risiko, dass die Tragrolle mangels ausreichender Bodenhaftung Schlupf entwickelt oder sogar stehen bleibt, erheblich verringert. Durch die profilierte Lauffläche wird somit auch die Wahrscheinlichkeit reduziert, dass die Tragrolle während eines Sävorgangs Erde aufschiebt. Der Aufschub von Erde und die daraus resultierende ungewünschte Bodenverschmierung und Dammbildung werden durch die profilierte Lauffläche ebenfalls effektiv vermieden. Ferner wird die Bodenstruktur durch die profilierte Lauffläche aufgebrochen und somit verbessert.

In einer bevorzugten Ausführungsform des erfindungsgemäßen Säaggregats weist die profilierte Lauffläche der Tragrolle einen oder mehrere Profilblöcke auf. Mehrere oder sämtliche Profilblöcke der Tragrollenlauffläche können sich hinsichtlich Form, Größe und/oder Ausrichtung voneinander unterscheiden oder können eine identische Form, Größe und/oder Ausrichtung aufweisen. Die Profilblöcke können als Stollen ausgebildet sein, sodass die Lauffläche der Tragrolle ein Stollen-Profil aufweist. Insbesondere bei leichten und nachgiebigen Böden kann durch ein Stollen-Profil die Bodenhaftung der Tragrolle erheblich verbessert werden.

In einer anderen bevorzugten Ausführungsform des erfindungsgemäßen Säaggregats ist eine oder sind mehrere Profilblöcke als längliche Profillamellen ausgebildet. Die länglichen Profillamellen können Querlamellen oder Längslamellen sein. Die länglichen Profillamellen können ein AS-Profil bilden, bei welchem die auf der linken Seite der Lauffläche angeordneten Profillamellen und die auf der rechten Seite der Lauffläche angeordneten Profillamellen aufeinander zulaufen. Das AS-Profil eignet sich besonders für schmierige Böden. Die auf der linken Seite der Lauffläche angeordneten Profillamellen und die auf der rechten Seite der Lauffläche angeordneten Profillamellen können sich auch über einen Überlappungsbereich der Lauffläche in Querrichtung überlappen. Ein Überlappen des Profils sorgt für bessere Laufruhe und bessere Tiefenführung. Die länglichen Profillamellen können auch ein EM-Profil bilden, bei welchem die Profillamellen parallel oder annähernd parallel zueinander ausgerichtet sind. Das EM-Profil eignet sich besonders für lose Böden.

Es ist außerdem ein erfindungsgemäßes Säaggregat vorteilhaft, bei welchem ein oder mehrere längliche Profillamellen quer oder schräg zur Umfangsrichtung der Lauffläche oder zur Laufrichtung der Tragrolle ausgerichtet sind. Alternativ oder zusätzlich kann eine oder können mehrere längliche Profillamellen parallel zu Umfangsrichtung der Lauffläche oder zur Laufrichtung der Tragrolle ausgerichtet sein. Die länglichen Profillamellen können ein laufrichtungsneutrales Profil ausbilden. Die länglichen Profillamellen können ein Querprofil ausbilden. Die länglichen Profillamellen können sowohl in Fahrtrichtung, quer zur Fahrtrichtung oder schräg zur Fahrtrichtung ausgerichtet sein.

Es ist darüber hinaus ein erfindungsgemäßes Säaggregat vorteilhaft, bei welchem sich eine oder mehrere längliche Profilamellen in Querrichtung nur über einen Teilbereich der Laufflächenbreite erstrecken. Die Lauffläche der Tragrolle wird seitlich durch Außenkanten der Lauffläche oder Rollenflanken der Tragrolle begrenzt. Wenn sich eine oder mehrere längliche Profillamellen in Querrichtung nur über einen Teilbereich der Laufflächenbreite erstrecken, ragen diese beispielsweise nicht bis an eine oder beide Außenkanten der Lauffläche bzw. Rollenflanken der Tragrolle heran. Die Außenkanten der Lauffläche sind vorzugsweise umlaufende die Lauffläche begrenzende Kanten. Alternativ oder zusätzlich erstrecken sich eine oder mehrere längliche Profillamellen in Querrichtung über die gesamte Laufflächenbreite. Diese länglichen Profillamellen weisen also eine Erstreckung in Querrichtung auf, welche der Laufflächenbreite entspricht.

Das erfindungsgemäße Säaggregat wird ferner dadurch vorteilhaft weitergebildet, dass die Lauffläche über die gesamte Laufflächenbreite profiliert ist. Dies kann einerseits dadurch erfolgen, dass sich eine oder mehrere längliche Profillamellen in Querrichtung über die gesamte Laufflächenbreite erstrecken, oder dadurch, dass mehrere längliche Profillamellen, welche sich in Querrichtung nur über einen Teilbereich der Laufflächenbreite erstrecken, derart angeordnet sind, dass sie sich gemeinsam über die gesamte Laufflächenbreite erstrecken.

In einer vorteilhaften Ausführungsform des erfindungsgemäßen Säaggregats weist die Lauffläche einen umlaufenden profilierungsfreien Laufflächenstreifen auf. Der profilierungsfreie Laufflächenstreifen kann seitlich angeordnet sein und mit einer Außenkante der Lauffläche oder einer Rollenflanke der Tragrolle abschließen. Der profilierungsfreie Laufflächenstreifen kann eine Breite in einem Bereich zwischen 5 mm und 20 mm aufweisen. Die Stollen bzw. die länglichen Profillamellen können eine Höhe von zumindest 5 mm, vorzugsweise eine Höhe von zumindest 10 mm, insbesondere eine Höhe von zumindest 15 mm aufweisen.

In einer anderen bevorzugten Ausführungsform des erfindungsgemäßen Säaggregats befindet sich der profilierungsfreie Laufflächenstreifen in einem seitlich außenliegenden Bereich der Lauffläche. Somit kann auf der Seite des profilierungsfreien Laufflächenstreifens eine Schneidscheibe, beispielsweise eine Kolterscheibe, neben der Tragrolle angerordnet werden, sodass die Tragrolle als Abstreifer für die Schneidscheibe dient und die von der Schneidscheibe abgestriffene Erde bzw. das von der Schneidscheibe abgestriffene Material über den profilierungsfreien Laufflächenstreifen abtransportiert werden kann, ohne dass die Bodenhaftung der Tragrolle durch die abgestriffene Erde bzw. das abgestriffene Material beeinträchtigt wird.

In einer Weiterbildung des erfindungsgemäßen Säaggregats weist die profilierte Lauffläche der Tragrolle eine oder mehrere vollständig oder teilweise umlaufende Rillen auf. Alternativ oder zusätzlich weist die profilierte Lauffläche der Tragrolle eine oder mehrere vollständig oder teilweise umlaufende Rippen auf. Die umlaufenden Rillen sind vorzugsweise umlaufende Einbuchtungen oder Einwölbungen. Die Rippen können beispielsweise als umlaufende Materialstege oder Auswölbungen ausgebildet sein. Ferner kann die profilierte Lauffläche der Tragrolle auch eine oder mehrere in Querrichtung verlaufende Rillen oder Rippen aufweisen.

In einer besonders bevorzugten Ausführungsform weist das erfindungsgemäße Säaggregat eine mit der Trägerstruktur verbundene Schneidscheibe auf, welche benachbart zu der Tragrolle angeordnet ist. Die Schneidscheibe kann eine Kolterscheibe sein. Kolterscheiben dienen zum Öffnen einer Furche im Boden, sodass eine gezielte Saatgutablage in die geöffnete Furche erfolgen kann. Vorzugsweise sind zwei Tragrollen mit profilierten Laufflächen an der Trägerstruktur angeordnet, wobei zwischen den zwei Tragrollen zwei V-förmig angestellte Schneidscheiben angeordnet sind. Die Tragrollen und die Schneidscheiben sind in Längsrichtung vorzugsweise versetzt zueinander angeordnet. Eine der Tragrollen dient dabei als Abstreifer für eine erste Schneidscheibe und die andere Tragrolle dient als Abstreifer für eine zweite Schneidscheibe.

In einer anderen bevorzugten Ausführungsform des erfindungsgemäßen Säaggregats befindet sich der profilierungsfreie Laufflächenstreifen auf der der Schneidscheibe zugewandten Seite der Lauffläche. Der profilierungsfreie Laufflächenstreifen dient als Lippe zur Reinigung der Schneidscheibe. Die Tragrolle dient als Abstreifer für die Schneidscheibe. Die Reinigungswirkung der Tragrolle wird durch den profilierungsfreien Laufflächenstreifen auf der der Schneidscheibe zugewandten Seite der Lauffläche erheblich verbessert. Durch die Reinigungswirkung für die Schneidscheibe erfährt die Tragrolle eine Widerstandskraft, wobei das Drehmoment der Tragrolle aufgrund der profilierten Lauffläche ausreichend ist, um die Widerstandskraft schlupffrei oder zumindest schlupfarm überwinden zu können. Es wird somit eine hohe Reinigungswirkung umgesetzt, ohne dass das Risiko einer übermäßigen Schlupfentwicklung besteht.

In einer weiteren bevorzugten Ausführungsform des erfindungsgemäßen Säaggregats weist die Lauffläche eine umlaufende Mulde auf und beidseitig vom Grund der umlaufenden Mulde erstrecken sich Muldenflanken seitlich nach außen. Der profilierungsfreie Laufflächenstreifen befindet sich vorzugsweise auf einer der Muldenflanken. Durch die umlaufende Mulde weist die Lauffläche in Querrichtung vorzugsweise eine Wellenkontur oder eine gewellte bzw. wellige Kontur auf.

Die der Erfindung zugrundeliegende Aufgabe wird ferner durch eine Sämaschine der eingangs genannten Art gelöst, wobei ein Säaggregat, mehrere oder sämtliche Säaggregate der erfindungsgemäßen Sämaschine nach einer der vorstehend beschriebenen Ausführungsformen ausgebildet sind. Hinsichtlich der Vorteile und Modifikationen der erfindungsgemäßen Sämaschine wird somit zunächst auf die Vorteile und Modifikationen des erfindungsgemäßen Säaggregats verwiesen.

Die Sämaschine ist vorzugsweise eine Einzelkorn- und/oder Direktsaatmaschine.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel eines erfindungsgemäßen Säaggregats in einer Seitenansicht;
- Fig. 2: das in der Fig. 1 abgebildete Säaggregat in einer perspektivischen Darstellung;
- Fig. 3: eine Tragrolle eines erfindungsgemäßen Säaggregats in einer perspektivischen Darstellung;
- Fig. 4: die in der Fig. 3 abgebildete Tragrolle in einer Frontalansicht;
- Fig. 5: eine weitere Tragrolle eines erfindungsgemäßen Säaggregats in einer perspektivischen Darstellung;
- Fig. 6: die in der Fig. 5 abgebildete Tragrolle in einer Frontalansicht;
- Fig. 7: eine weitere Tragrolle eines erfindungsgemäßen Säaggregats in einer Schnittdarstellung; und
- Fig. 8: die in der Fig. 7 abgebildete Tragrolle in einer weiteren Schnittdarstellung.

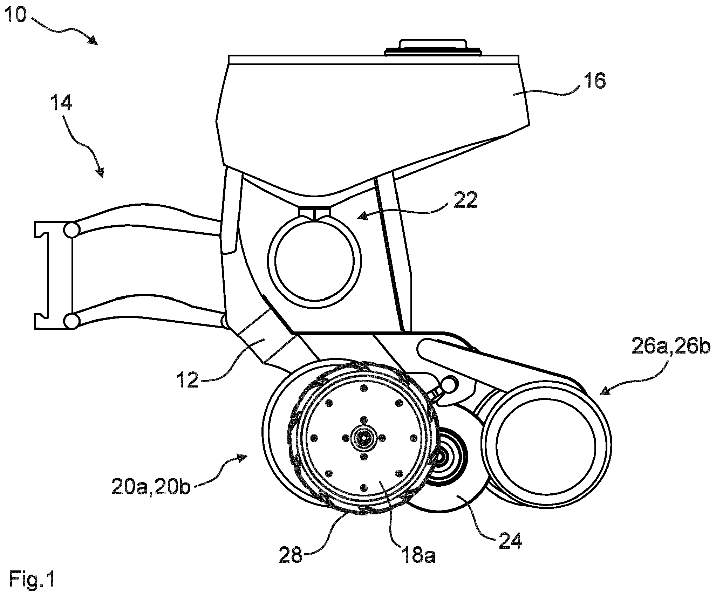

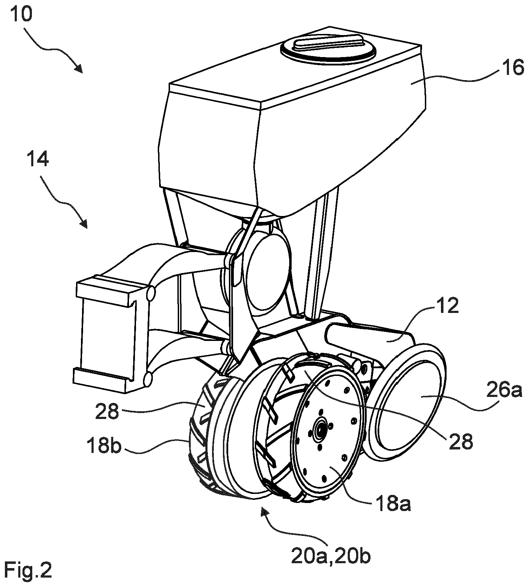

Die Fig. 1 und 2 zeigen ein Säaggregat 10 für eine Einzelkornsämaschine. Das Säaggregat 10 weist eine Trägerstruktur 12 auf, welche über ein Parallelogrammgestänge 14 an einem Querbalken befestigt werden kann. Das Parallelogrammgestänge 14 erlaubt eine Vertikalbewegung des Säaggregats 10 in Bezug auf den Querbalken.

An der Trägerstruktur 12 des Säaggregats 10 ist ein Vorratsbehälter 16 für das auszubringende Saatgut angeordnet. Der Vorratsbehälter 16 weist einen trichterförmigen Auslauf auf, über welchen das Saatgut einer Vereinzelungseinrichtung 22 zugeführt wird. Die Vereinzelungseinrichtung 22 dient zum Vereinzeln von Saatkörnern, sodass die vereinzelten Saatkörner nachfolgend in einem vorgegebenen Abstand in eine Saatfurche abgelegt werden können. Die Kornführung für die vereinzelten Saatkörner in Richtung der Saatfurche ist nicht dargestellt.

An der Trägerstruktur 12 sind zwei V-förmig angestellte Schneidscheiben 20a, 20b angeordnet. Die Schneidscheiben 20a, 20b sind als Kolterscheiben ausgebildet und dienen zum Öffnen der Saatfurche. Geringfügig versetzt zu den Schneidscheiben 20a, 20b sind an der Trägerstruktur 12 Tragrollen 18a, 18b angeordnet. Die Tragrollen 18a, 18b dienen zur Tiefenführung des Säaggregats 10. Die V-förmig angestellten Schneidscheiben 20a, 20b sind zwischen den Tragrollen 18a, 18b angeordnet, wobei die Mittelachse der Tragrollen 18a, 18b einen Längsversatz zu der Mittelachse der Schneidscheiben 20a, 20b aufweist. Die Tragrolle 18a dient als Abstreifer für die Schneidscheibe 20a. Die Tragrolle 18b dient als Abstreifer für die Schneidscheibe 20b.

Hinter den Schneidscheiben 20a, 20b ist eine Fangrolle 24 angeordnet, welche zum Abfangen des in die Saatfurche abgelegten Saatguts dient. Hinter der Fangrolle 24 sind V-förmig angestellte Andruckrollen 26a, 26b angeordnet, welche zum Bedecken des Saatguts mit Bodenmaterial dienen und den Boden im Nahbereich der Saatfurche andrücken.

Die Tragrollen 18a, 18b weisen eine profilierte Lauffläche 28 auf. Durch die profilierte Lauffläche 28 verringert sich aufgrund eines verbesserten Eigenantriebs das Schlupfrisiko, sodass der Aufschub von Erdmaterial durch die Tragrollen 18a, 18b vermieden oder zumindest erheblich reduziert wird. Somit wird auch eine durch Schlupf verursachte Verschmierung des Bodens und eine Dammbildung im Nahbereich der Saatfurche verhindert. Darüber hinaus wird die Bodenstruktur durch die profilierte Lauffläche 28 der Tragrollen 18a, 18b aufgebrochen und somit verbessert.

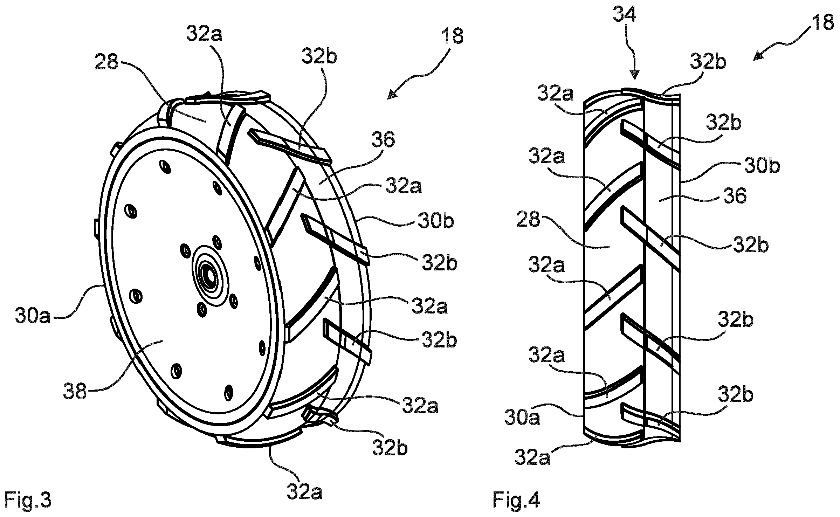

Die Fig. 3 und 4 zeigen eine Tragrolle 18 mit profilierter Lauffläche 28. Die Lauffläche der Tragrolle 18 weist mehrere Profilblöcke 32a, 32b auf. Die Profilblöcke 32a grenzen an die Außenkante 30a der Lauffläche 28 an und erstrecken sich über eine Teilbreite der Lauffläche 28. Die Profilblöcke 32b grenzen an die Außenkante 30b der Lauffläche 28 an und erstrecken sich ebenfalls über einen Teilbereich der Laufflächenbreite. Die Profilblöcke 32a, 32b sind als längliche Profillamellen ausgebildet und bilden ein AS-Profil aus, bei welchem die auf der linken Seite der Lauffläche 28 angeordneten Profillamellen 32a und die auf der rechten Seite der Lauffläche 28 angeordneten Profillamellen 32b aufeinander zulaufen. Die als Profillamellen ausgebildeten Profilblöcke 32a, 32b sind schräg zur Umfangsrichtung der Lauffläche 28 ausgerichtet und überlappen sich in einem umlaufenden Überlappungsbereich 34. Obwohl sich sämtliche Profillamellen lediglich über einen Teilbereich der Laufflächenbreite erstrecken, ist die Lauffläche 28 aufgrund des Überlappungsbereichs 34 über die gesamte Laufflächenbreite profiliert.

Die Lauffläche 28 weist ferner eine umlaufende Mulde 36 auf, wobei sich beidseitig vom Grund der umlaufenden Mulde 36 Muldenflanken seitlich nach außen erstrecken. Auf der Seite der Außenkante 30b kann eine Schneidscheibe 20b, beispielsweise eine Kolterscheibe, angeordnet werden. Die Tragrolle 18 kann dann als Abstreifer für die Schneidscheibe 20b dienen, wobei die umlaufende Mulde 36 einen verbesserten Abtransport des abgestriffenen Materials ermöglicht, ohne dass der Materialabtransport zur Beeinträchtigung der Bodenhaftung der Tragrolle 18 führt.

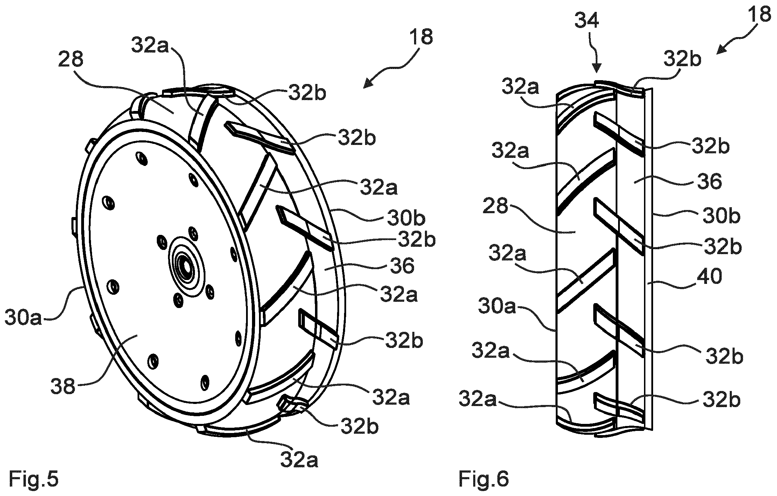

Die Fig. 5 und 6 zeigen ebenfalls eine Tragrolle 18 mit einer profilierten Lauffläche 28. Die Lauffläche 28 weist in diesem Fall einen umlaufenden profilierungsfreien Laufflächenstreifen 40 auf. Der profilierungsfreie Laufflächenstreifen 40 grenzt an die Außenkante 30b der Lauffläche 28 an und kann eine Breite im Bereich zwischen 5 mm und 20 mm aufweisen. Der profilierungsfreie Laufflächenstreifen 40 ist also in einem seitlich außenlieg enden Bereich der Lauffläche 28 angeordnet. Auf der Seite des profilierungsfreien Laufflächenstreifen 40 kann eine Schneidscheibe 20b angeordnet werden. Der profilierungsfreie Laufflächenstreifen 40 dient als Lippe zur Reinigung der Schneidscheibe 20b, wobei die Reinigungswirkung durch den profilierungsfreien Laufflächenstreifen 40 erheblich verbessert wird. Der profilierungsfreie Laufflächenstreifen 40 befindet sich auf der sich in Richtung der Außenkante 30b erstreckenden Muldenflanke der umlaufenden Mulde 36.

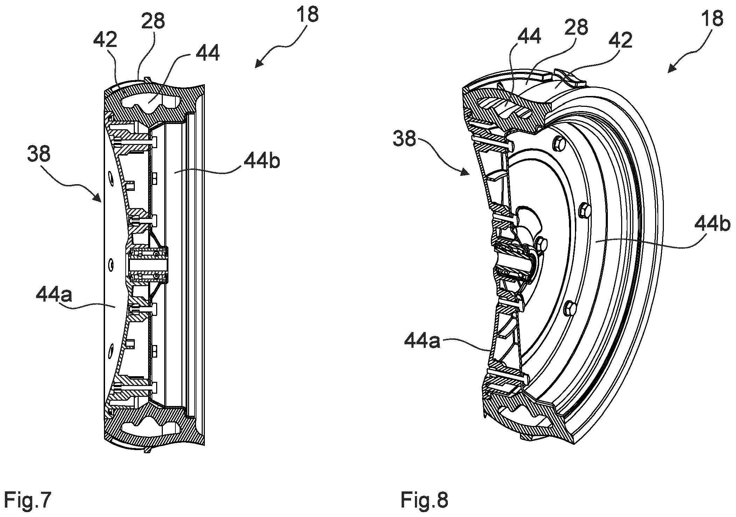

Die Fig. 7 und 8 zeigen, dass die profilierte Lauffläche 28 Bestandteil eines Mantelkörpers 42 ist. Der Mantelkörper 42 kann ein umlaufender Gummikörper sein. Unterhalb der profilierten Lauffläche 28 weist der Mantelkörper 42 einen umlaufenden Hohlraum 44 auf. Der Hohlraum 44 ermöglicht einen Walkvorgang, über welchen die Lauffläche 28 verformt wird. Durch die Laufflächenverformung wird an der Lauffläche 28 anhaftendes Bodenmaterial von der Lauffläche 28 gelöst, sodass eine Selbstreinigungsfunktion der Lauffläche 28 umgesetzt wird.

Die Felge 38 der Tragrolle 18 ist zweiteilig ausgebildet und weist ein erstes aus Kunststoff ausgebildet Felgenteil 44a und ein zweites als Blech ausgebildetes Felgenteil 44b auf. Die Felgenteile 44a, 44b sind über mehrere als Schrauben ausgebildete Befestigungselemente aneinander befestigt. Der die Lauffläche 28 tragende Mantelkörper 42 kann zwischen den Felgenteilen 44a, 44b verklemmt werden, sodass ein zeit- und kostenaufwendiges Aufziehen des Mantelkörpers 42 auf die Felge 38 nicht erforderlich ist.

### Bezugszeichenliste

- 10: Säaggregat
- 12: Trägerstruktur
- 14: Parallelogrammgestänge
- 16: Vorratsbehälter
- 18, 18a, 18b: Tragrollen
- 20a, 20b: Schneidscheiben
- 22: Vereinzelungseinrichtung
- 24: Fangrolle
- 26a, 26b: Andruckrollen
- 28: Lauffläche
- 30a, 30b: Außenkanten
- 32a, 32b: Profilblöcke
- 34: Überlappungsbereich
- 36: Mulde
- 38: Felge
- 40: Laufflächenstreifen
- 42: Mantelkörper
- 44: Hohlraum
- 44a, 44b: Felgenteile

## Patentansprüche

1. Säaggregat (10) für eine Sämaschine, mit
- einer Trägerstruktur (12), und
- zumindest einer mit der Trägerstruktur (12) verbundenen Tragrolle (18, 18a, 18b),
**dadurch gekennzeichnet, dass** die Tragrolle (18, 18a, 18b) eine profilierte Lauffläche (28) aufweist.

2. Säaggregat (10) nach Anspruch 1,
**dadurch gekennzeichnet, dass** die profilierte Lauffläche (28) der Tragrolle (18, 18a, 18b) einen oder mehrere Profilblöcke (32a, 32b) aufweist.

3. Säaggregat (10) nach Anspruch 2,
**dadurch gekennzeichnet, dass** ein oder mehrere Profilblöcke (32a, 32b) als längliche Profillamellen ausgebildet sind.

4. Säaggregat (10) nach Anspruch 3,
**dadurch gekennzeichnet, dass**
- eine oder mehrere längliche Profillamellen quer oder schräg zur Umfangsrichtung der Lauffläche (28) oder zur Laufrichtung der Tragrolle (18, 18a, 18b) ausgerichtet sind; und/oder
- eine oder mehrere längliche Profillamellen parallel zur Umfangsrichtung der Lauffläche (28) oder zur Laufrichtung der Tragrolle (18, 18a, 18b) ausgerichtet sind.

5. Säaggregat (10) nach Anspruch 3 oder 4,
**dadurch gekennzeichnet, dass**
- sich eine oder mehrere längliche Profillamellen in Querrichtung nur über einen Teilbereich der Laufflächenbreite erstrecken, und/oder
- sich eine oder mehrere längliche Profillamellen in Querrichtung über die gesamte Laufflächenbreite erstrecken.

6. Säaggregat (10) nach einem der Ansprüche 3 bis 5,
**dadurch gekennzeichnet, dass** die Lauffläche (28) über die gesamte Laufflächenbreite profiliert ist.

7. Säaggregat (10) nach einem der Ansprüche 3 bis 5,
**dadurch gekennzeichnet, dass** die Lauffläche (28) einen umlaufenden profilierungsfreien Laufflächenstreifen (40) aufweist.

8. Säaggregat (10) nach Anspruch 7,
**dadurch gekennzeichnet, dass** sich der profilierungsfreie Laufflächenstreifen (40) in einem seitlich außenliegenden Bereich der Lauffläche (28) befindet.

9. Säaggregat (10) nach einem der vorstehenden Ansprüche,
**dadurch gekennzeichnet, dass** die profilierte Lauffläche (28) der Tragrolle (18, 18a, 18b)
- eine oder mehrere vollständig oder teilweise umlaufende Rillen aufweist; und/oder
- eine oder mehrere vollständig oder teilweise umlaufende Rippen aufweist.

10. Säaggregat (10) nach einem der vorstehenden Ansprüche,
**gekennzeichnet durch** eine mit der Trägerstruktur (12) verbundene Schneidscheibe (20a, 20b), welche benachbart zu der Tragrolle (18, 18a, 18b) angeordnet ist.

11. Säaggregat (10) nach Anspruch 10,
**dadurch gekennzeichnet, dass** sich der profilierungsfreie Laufflächenstreifen (40) auf der der Schneidscheibe (20a, 20b) zugewandten Seite der Lauffläche (28) befindet.

12. Säaggregat (10) nach einem der vorstehenden Ansprüche,
**dadurch gekennzeichnet, dass** die Lauffläche (28) eine umlaufende Mulde (36) aufweist und sich beidseitig vom Grund der umlaufenden Mulde (36) Muldenflanken seitlich nach außen erstrecken, wobei sich der profilierungsfreie Laufflächenstreifen (40) vorzugsweise auf einer der Muldenflanken befindet.

13. Sämaschine, insbesondere Einzelkorn- und/oder Direktsaatmaschine, mit
- mehreren Säaggregaten (10) zur Ablage von Saatkörner auf eine landwirtschaftliche Nutzfläche,
**dadurch gekennzeichnet, dass** ein Säaggregat (10), mehrere oder sämtliche Säaggregate (10) nach einem der vorstehenden Ansprüche ausgebildet ist.
